# EUROPÄISCHE PATENTSCHRIFT

(11) **EP 3 137 999 B1**
(45) Veröffentlichungstag und Bekanntmachung des Hinweises auf die Patenterteilung: **08.04.2020**
(21) Anmeldenummer: 14731931.3
(22) Anmeldetag: 10.06.2014
(51) Int. Cl.: G06F 9/46

(54) **VERFAHREN UND VORRICHTUNG ZUR TRANSAKTIONSERWEITERUNG BEI OPC UA**
METHOD AND APPARATUS FOR EXPANDING TRANSACTIONS IN OPC UA
PROCÉDÉ ET DISPOSITIF D'EXTENSION DE TRANSACTION POUR UNE SESSION OPC UA

(43) Veröffentlichungstag der Anmeldung: 08.03.2017
(73) Patentinhaber: Siemens Aktiengesellschaft, 80333 München (DE)
(72) Erfinder: DEIRETSBACHER, Karl-Heinz, 91090 Effeltrich (DE); ERLMANN, Markus, 95336 Mainleus (DE); KERSCHBAUM, Sven, 90768 Fürth (DE); VOLKMANN, Frank, 90475 Nürnberg (DE)
(86) Internationale Anmeldenummer: PCT/EP2014/062018
(87) Internationale Veröffentlichungsnummer: WO 2015/188852

(56) Entgegenhaltungen:
- DE-A1-102007 062 986
- US-A1- 2013 246 368

## Beschreibung

OPC UA (OPC Unified Architecture) ist ein industrielles Standardprotokoll der OPC Foundation zur hersteller-unabhängigen Kommunikation für den Austausch von Maschinendaten insbesondere in der Prozessautomatisierung.
OPC UA ist ein relativ neuer Standard, bei dem der ursprüngliche Fokus nicht auf der Steuerung einer Industrieanlage lag, sondern vielmehr beim standardisierten Informationsaustausch insbesondere zwischen Geräten unterschiedlicher Hersteller.

Inzwischen ist OPC UA auch direkt in automatisierungstechnischen Geräten integriert, sodass die Notwendigkeit zum konsistenten Schreiben von Daten entsteht.
In automatisierungstechnischen Anlagen besteht die Notwendigkeit, zwischen unterschiedlichen Geräten Prozessinformationen (wie Prozesswerte, Messwerte, Parameter, Steuerungsbefehle) auszutauschen. Hierbei ist es wichtig, dass die Informationen konsistent und fehlersicher zwischen den Teilnehmern übertragen werden. Dies ist insbesondere bei datenverändernden Aufrufen (d. h. dem Schreiben von Variablen) wichtig.
In der Praxis muss die Konsistenz über mehrere einzelne Aufrufe in der Anlage sichergestellt sein. So kann es sein, dass eine Veränderung im Prozess an mehreren Stellen in den Prozess eingreift, wobei die Ziele der Aufrufe unterschiedlich sind und durch unterschiedliche Aufrufe angesprochen werden müssen.
Andere Gründe für die Notwendigkeit mehrerer unterschiedlicher, aber logisch zusammenhängender Aufrufe wären zum Beispiel:
- Unterschiedliche Sicherheitseinstellungen,
- Unterschiedliche Art des Aufrufs (Write/Schreiben, Methodenaufruf),
- Organisatorische Gründe.

Bei OPC UA werden Variablen einzeln betrachtet (auch innerhalb eines Schreib-Aufrufs, eines sogenannten WRITE-Calls, mit mehreren Variablen); der Server teilt dies dem Client über einzelne Statuscodes (pro Variable) mit. Andere Möglichkeiten sind in der Spezifikation nicht vorgesehen.

Das durch die OPC UA spezifizierte Informationsmodell ist nicht mehr nur eine Hierarchie aus Ordnern, Items und Properties. Es ist ein sogenanntes Full-Mesh-Network aus Knoten (Nodes) mit dem neben den Nutzdaten eines Nodes auch Meta- und Diagnoseinformationen repräsentiert werden. Ein Node ähnelt einem Objekt aus der objektorientierten Programmierung. Ein Node kann Attribute besitzen, die gelesen werden können (Data Access DA, Historical Data Access HDA). Es ist möglich Methoden zu definieren und aufzurufen. Eine Methode besitzt Aufrufargumente und Rückgabewerte. Sie wird durch ein Command aufgerufen. Weiterhin werden Events unterstützt, die versendet werden können (AE, DA DataChange), um bestimmte Informationen zwischen Geräten auszutauschen. Ein Event besitzt unter anderem einen Empfangszeitpunkt, eine Nachricht und einen Schweregrad. Die o. g. Nodes werden sowohl für die Nutzdaten als auch alle anderen Arten von Metadaten verwendet. Der damit modellierte OPC-Adressraum beinhaltet nun auch ein Typmodell, mit dem sämtliche Datentypen spezifiziert werden.

In OPC UA ist ein Sitzungskonzept bekannt (Session), das mit speziellen Service-Calls (BeginSession, ActivateSession, End-Session) implementiert wird. Es kann mehrere Sessions geben, die simultan auf einem Server existieren. Innerhalb einer OPC UA Verbindung ist aber zu einem Zeitpunkt immer nur eine solche Session aktiv. Unter anderem werden Sessions dazu verwendet, einen Benutzer bzw. eine Rolle eindeutig zuzuordnen.

Ohne den OPC UA Standard zu verletzen könnten ein Client und ein Server (die aufeinander zugeschnitten sind) vereinbaren, dass der Server einen Write-Call als genau eine konsistente Schreiboperation auffasst und diesen Aufruf nur im Ganzen akzeptiert oder im Ganzen ablehnt.

Dieser Mechanismus ist jedoch nicht - wie oben beschrieben - allgemeingültig, sondern funktioniert nur
- wenn Client und Server aufeinander zugeschnitten sind. Client und Server müssen die Information austauschen, dass sie aufeinander zugeschnitten sind, d. h. diese Information muss z. B. im Anmeldeprotokoll übertragen werden.
- Wenn es sich um genau einen verändernden Aufruf handelt und/oder
- wenn die Ziele der Schreiboperationen auf demselben Zielsystem liegen (aggregierende Server könnten hiermit nicht behandelt werden).

Wie bereits weiter oben ausgeführt reicht dies in der Praxis nicht aus, da konsistente Operationen häufig nicht mit einem einzigen verändernden Aufruf abgedeckt werden können.

Es ist daher Aufgabe der Erfindung, ein Verfahren und eine Vorrichtung anzugeben, die die oben beschriebenen Probleme behebt.

Die beschriebene Aufgabe wird gelöst durch ein Verfahren und eine Vorrichtung gemäß einem der unabhängigen Patentansprüche.

Beansprucht wird ein Verfahren zur Kommunikation zwischen einem OPC-UA Client und einem OPC-UA Server eines Client/Server-Systems unter Verwendung des Kommunikationsprotokolls OPC-UA wobei zur Interaktion des Clients mit dem Server OPC-UA Aufrufe verwendet werden, wobei die Kommunikation sessionbasiert ausgeführt wird und nach Eröffnung einer Session zumindest ein OPC-UA Aufruf vom Server empfangen und gespeichert wird und die Ausführung des OPC-UA Aufrufs beim Server zunächst simuliert wird und dem Client als Antwort zunächst das Ergebnis der Simulation übermittelt wird.

Eine OPC UA Session wird erfindungsgemäß als eine einzige Transaktion aufgefasst. Eine Transaktion beginnt mit dem Service-Call für CreateSession oder ActivateSession. Eine Transaktion wird beendet (mit Ausführung) durch den Service-Call CloseSession oder ActivateSession. Eine Transaktion wird abgebrochen (d .h. ohne Ausführung) mit dem Service-Call Cancel.
Das bedeutet: der Befehl ActivateSession beendet eine vorherige Transaktion (mit Ausführung) und beginnt eine neue Transaktion.
Transaktion in diesem Kontext bedeutet, dass alle Service-Calls bis auf die oben genannten nur simuliert und nicht ausgeführt werden und die Ausführung der Service-Calls auf das Beenden der Transaktion verschoben wird.
Jede Operation innerhalb einer Session wird formal geprüft und danach simuliert. Das simulierte Ergebnis bzw. das Ergebnis der formalen Überprüfung wird sofort an den Client geschickt. Der Client erhält also eine Vorschau auf das Ergebnis der Operationen.
Wenn der Client feststellt, dass eine der durchgeführten Operationen nicht zum gewünschten Ergebnis führen würde, kann er die Operationen verwerfen. Will der Client, dass die Mengenoperation ausgeführt wird, so beendet er die momentane Session. Soll eine weitere Mengenoperation angelegt werden, beendet der Client die Session. Die Mengenoperation wird ausgeführt und die Session in den Ursprungszustand versetzt. Soll keine weitere Mengenoperation angelegt werden, beendet der Client die Session.
Server und Client einigen sich im Verbindungsaufbau über die Aktivierung der vorgestellten Mechanik.

Wie oben ausgeführt, wird das Problem der konsistenten datenverändernden Mengenoperation heute von OPC UA nicht adressiert. Dies wird vermehrt in der Zukunft eine wichtige Anforderung sein, insbesondere in der Kommunikation zwischen Automatisierungssystemen.

Diese Erfindung löst genau dieses Problem.
Auf überraschend einfache Art und Weise werden die von OPC UA definierten Sessions um die Fähigkeit erweitert, transaktionsorientierte Mengenoperationen durchführen zu können. Dies wird dadurch erreicht, dass die Ausführung der Operationen innerhalb einer Session auf das Ende der Session verschoben werden. Alle Aufrufe, die innerhalb einer solchen Session durchgeführt werden, erhalten ihre normalen Service-Ergebnisse. Diese sind lediglich mit der Unsicherheit behaftet, dass sie nur simuliert sind. An der grundsätzlichen Mechanik der Aufrufe (Calls) innerhalb einer Session muss nichts geändert werden.

Diese Methode hat im Gegensatz zu den, beispielsweise aus der Druckschrift DE 10 2007 062 986 A1 bekannten Transaktionen nicht die Möglichkeit eines Rollbacks, also eines Rückgängigmachens der Operationsausführung.

Die Druckschrift DE 10 2007 062 986 A1 offenbart ein Verfahren und eine Vorrichtung, mit denen die Durchführung von Transaktionen mit Commit und Rollback im Rahmen von OPC-UA-Sessions ermöglicht wird.

Bei näherer Betrachtung stellt man fest, dass dieses oftmals für die Automatisierungstechnik weder notwendig noch umsetzbar oder sinnvoll ist. Wenn ein Ventil erst geöffnet ist, kann der Zustand vor dem Öffnen des Ventils nicht mehr hergestellt werden, weil z. B. bereits Flüssigkeit aus einem Behälter ausgetreten ist. Das heißt neben dem Schließen des Ventils, also der Herstellung des Ausgangszustands "aus Sicht des Ventils" muss noch ein weiterer Schritt (Cleanup) durchgeführt werden. Daher ist ein aus dem Datenbankumfeld bekannter Rollback bei diesem Beispiel nicht möglich.

Im Folgenden wird die Erfindung durch Figuren dargestellt und weiter erläutert. Dabei zeigt
Figur 1 eine beispielhafte Anwendung der Erfindung im Automatisierungsumfeld,
Figur 2 einen beispielhaften Kommunikationswechsel bei erfolgreicher Ausführung einer Aufgabe / Menge von Operationen gemäß dem Ausführungsbeispiel 1,
Figur 3 einen beispielhaften Kommunikationswechsel bei Auftreten eines Unterbrechungswunsches nach Ausführung einer Aufgabe / Menge von Operationen gemäß eines zweiten Ausführungsbeispiels und
Figur 4 einen weiteren beispielhaften Kommunikationswechsel bei Auftreten eines Sessionwechsels gemäß eines dritten Ausführungsbeispiels.

Im Weiteren wird ein bevorzugtes Ausführungsbeispiel erläutert. Dieses Beispiel soll die Erfindung nur erläutern, nicht einschränken.

Die beispielhafte Aufgabe, die die Automatisierungsanlage ausführen soll, sei das Mischen von grüner Farbe aus gelben und blauen Flüssigkeiten. In der Anlage gibt es drei OPC-UA Server: einen Server UA-S3 am blauen Tank B, einen Server UA-S2 am gelben Tank Y und einen Server UA-S1 am Mischtank G, in dem die grüne Farbe gemischt wird. Für die richtige Grün-Mischung müssen die Ventile V1, V2 vom gelben und blauen Tank gleichzeitig geöffnet werden. Wenn nun folgender Fehler auftritt: ein Ventil kann nicht korrekt geöffnet werden, müssen zuerst alle geöffneten Zulaufventile V1, V2 wieder geschlossen werden, und dann am Mischtank G das Ventil R in Richtung Entsorgung geöffnet werden, um die gesammelte Flüssigkeit zu entsorgen. Die Ansteuerung der Server UA-S1, UA-S2 und UA-S3 erfolgt durch den Client UA-C.

Hier wäre ein Rollback zwar wünschenswert, er ist aber nicht möglich. Durch das Öffnen der Ventile ist in den beiden oberen Tanks B, Y bereits Flüssigkeit ausgetreten und in dem unteren Tank G geflossen. Es kann nur ein definierter Zustand für die Ventile V1, V2 wieder hergestellt werden. Zusätzliche Arbeitsschritte, um den Ursprungszustand wiederherzustellen, also beispielsweise die Entsorgung der in den unteren Tank G eingetretene Flüssigkeit, sind nicht abbildbar und müssen programmtechnisch gelöst werden.

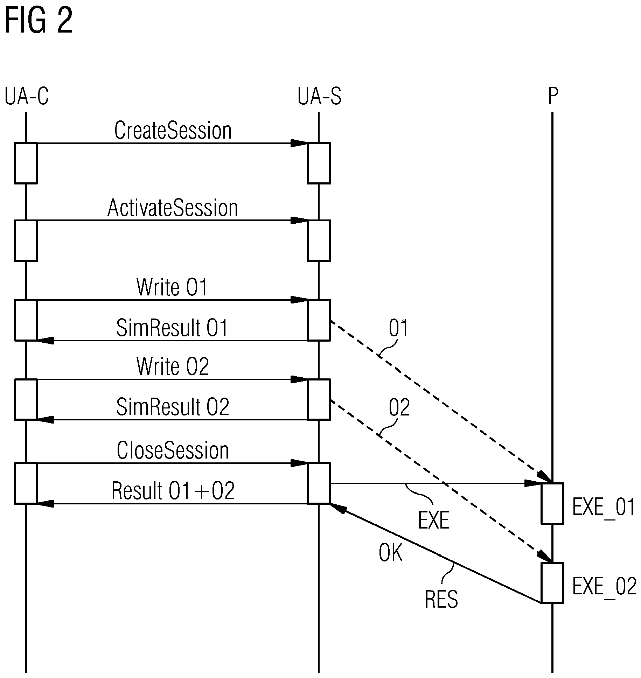

In den Figuren 2 bis 4 sind beispielhaft die Kommunikationsvorgänge zwischen Client UA-C und den Servern UA-S1, UA-S2, UA-S3 gemäß der Erfindung aufgezeigt.

In einem ersten bevorzugten Ausführungsbeispiel 1 der Figur 2 wird ein normaler Ablauf einer Transaktion mit mehreren Schreibbefehlen beschrieben.

Ein Client UA-C verbindet sich zum Server UA-S und öffnet mittels des Befehls CreateSession eine Session, CreateSession, zu einem Server UA-S. Als Ergebnis des Befehls wird eine Session im Server UA-S angelegt.

Beim Verbindungsaufbau zeigt er an, dass diese Session eine Session im Sinne der Erfindung ist. In Folge dessen wird die neue Session gültig.
In einem nächsten Schritt ruft der Client den Befehl ActivateSession auf. Eine leere Transaktion wird begonnen, indem der Client einen Write Aufruf sendet, Write01. Der Write-Aufruf wird formal überprüft. Im Fehlerfall erhält der Client eine entsprechende Antwort.
Wenn kein Fehler auftritt, wird der Write-Aufruf simuliert, der Client erhält das simulierte Ergebnis und der Server speichert den Write-Aufruf.
Wenn der Client einen Call-Befehl sendet, in der Figur nicht dargestellt, wird dieser ebenfalls zunächst formal überprüft. Im Fehlerfall erhält der Client eine entsprechende Antwort. Ansonsten wird der Call-Befehl simuliert, der Client erhält das simulierte Ergebnis und der Server speichert den Call-Aufruf. Diese werden im Sinne der Erfindung auf dem Server UA-S gespeichert. Der Client UA-C erhält für Write01 und Write02 jeweils die simulierten Ergebnisse, SimResult01, SimResult02.

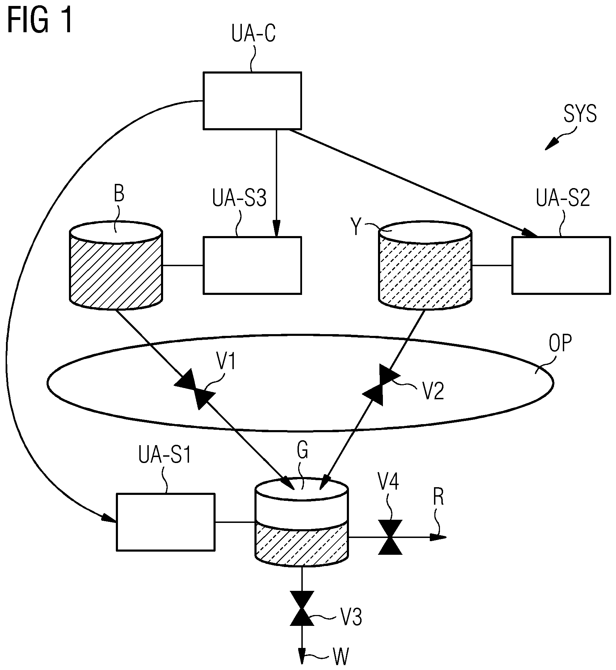

Zuletzt ruft der Client den Befehl CloseSession auf. Die zuvor gesammelten Aufrufe Write und gegebenenfalls Call werden erst dann auf dem Produktivsystem P ausgeführt. Dadurch wird die Ausführung der Schreibbefehle Write01 und Write02 angestoßen, also bezogen auf das Beispiel in Figur 1 die Ventile V1, V2 geöffnet. Die zuvor nur simulierten Operationen zum Öffnen von Ventil V1, Write01, und zum Öffnen von Ventil V2, Write02, werden ausgeführt.
Der Client UA-C erhält in der CloseSession-Antwort Result01+02 das Sammelergebnis über die ausgeführten Operationen EXE_01, EXE_02. Danach wird die Session beendet.

In diesem Fall wurden beide Ventile V1 und V2 erfolgreich geöffnet, der Client erhält also nach Ausführung EXE_01, EXE_02 eine positive Antwort OK.

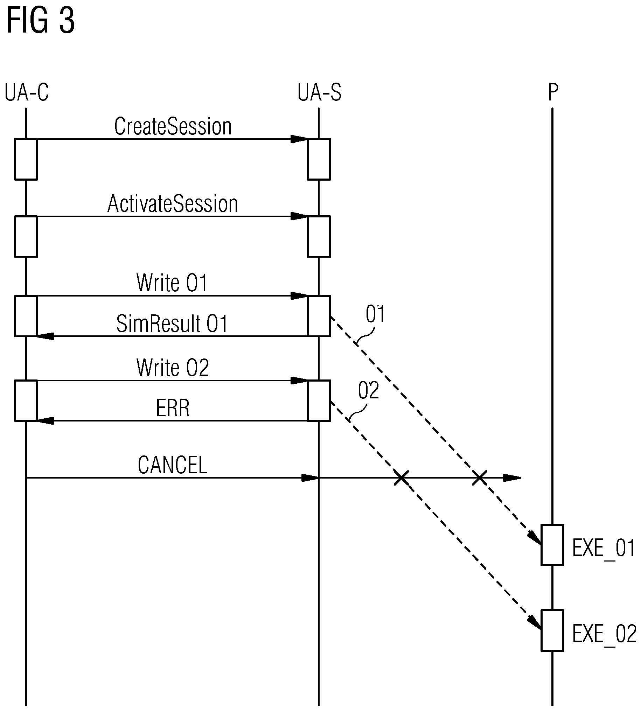

In einem weiteren Ausführungsbeispiel 2 der Figur 3 wird beschrieben, wie der Client UA-C die Transaktion jederzeit, mittels CANCEL, abbrechen kann, ohne dass die gespeicherten Operationen ausgeführt werden.
Der Client UA-C verbindet sich zum Server UA-S und ruft mittels des Befehls CreateSession eine neue Session auf. Als Ergebnis des Befehls wird eine Session im Server angelegt.
Nun ruft der Client den Befehl ActivateSession auf. Die Session wird damit gültig, eine leere Transaktion wird begonnen indem der Client einen Write Aufruf, Write01, sendet.
Der Write-Aufruf wird formal überprüft, im Fehlerfall erhält der Client eine entsprechende Antwort.
Nach der erfolgten Formalprüfung wird der Write-Aufruf simuliert, und der Client erhält das am Ende das simulierte Ergebnis des Write Aufrufs, SimResult01. Der Server speichert den Write-Aufruf.
Statt einem Call Befehl sendet der Client UA-C jetzt einen Cancel Befehl. Die Session wird konsequenterweise abgebrochen. Die im Server gesammelten Aufrufe (Write) werden nicht ausgeführt und verworfen.
Zuletzt ruft der Client UA-C den Befehl CloseSession auf. Die Session wird beendet, ohne dass die Schreibbefehle ausgeführt wurden.

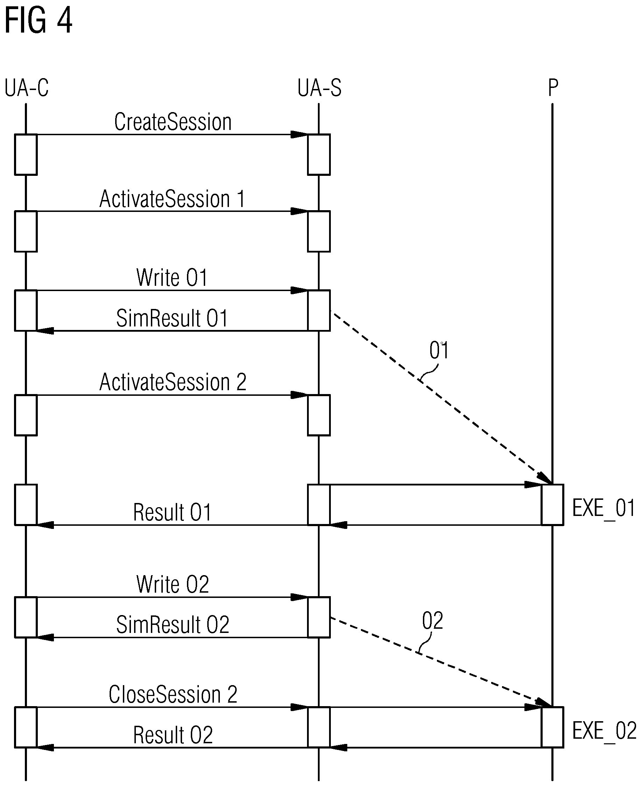

In einem letzten Ausführungsbeispiel 3 der Figur 4 wird beschrieben, wie der Client UA-C eine weitere Transaktion innerhalb einer Session beginnt:
Wie bei den beiden anderen Ausführungsbeispielen verbindet sich ein Client UA-C zum Server UA-S und ruft mittels des Befehls CreateSession eine neue Session auf. Als Ergebnis des Befehls wird eine Session im Server angelegt.

Nun ruft der Client UA-C den Befehl ActivateSession auf. Die Session wird damit gültig, eine leere Transaktion wird begonnen indem der Client UA-C einen Write Aufruf sendet.
Der Write-Aufruf wird formal überprüft.
Im Fehlerfall erhält der Client UA-C eine entsprechende Antwort.
Wenn kein Fehler aufgetreten ist, wird der Write-Aufruf simuliert, der Client erhält das simulierte Ergebnis und der Server speichert den Write-Aufruf.
Die gespeicherten Operationen werden ausgeführt. Die Liste der gespeicherten Aufrufe ist danach leer. Damit beginnt eine neue Transaktion.
Das Gesamtergebnis der Operationen wird zum Client gesendet.

Der Client sendet einen Write Befehl, der formal überprüft wird. Im Fehlerfall erhält der Client eine entsprechende Antwort.
Der Write-Aufruf wird simuliert, das simulierte Ergebnis wird an den Client übermittelt und der Server speichert den Write-Aufruf.
Im nächsten Schritt des Ausführungsbeispiels ruft der ruft einen Call-Befehl auf, dieser wird formal überprüft. Im Fehlerfall erhält der Client eine entsprechende Antwort.
Dann wird der Call-Aufruf simuliert und das simulierte Ergebnis an den Client übermittelt. Der Server speichert den Call-Aufruf.
In einem letzten Schritt ruft der Client CloseSession auf. Die gesammelten Aufrufe (Write, Call) werden dann auf dem Server ausgeführt. Der Client erhält in der CloseSession-Antwort das Sammelergebnis über die ausgeführten Operationen. Dann wird die Session beendet.

Die gespeicherten Operationen werden ausgeführt. Die Liste der gespeicherten Aufrufe ist danach leer. Damit beginnt eine neue Transaktion.
Das Gesamtergebnis der Operationen wird zum Client gesendet.

Der Client sendet einen Write Befehl, der formal überprüft wird. Im Fehlerfall erhält der Client eine entsprechende Antwort.

Der Write-Aufruf wird simuliert, das simulierte Ergebnis wird an den Client übermittelt und der Server speichert den Write-Aufruf.

Im nächsten Schritt des Ausführungsbeispiels ruft der ruft einen Call-Befehl auf, dieser wird formal überprüft. Im Fehlerfall erhält der Client eine entsprechende Antwort.

Dann wird der Call-Aufruf simuliert und das simulierte Ergebnis an den Client übermittelt. Der Server speichert den Call-Aufruf.

In einem letzten Schritt ruft der Client CloseSession auf. Die gesammelten Aufrufe (Write, Call) werden dann auf dem Server ausgeführt. Der Client erhält in der CloseSession-Antwort das Sammelergebnis über die ausgeführten Operationen. Dann wird die Session beendet.

## Patentansprüche

1. Verfahren zur Kommunikation zwischen einem Client (UA-C) und einem Server (UA-S1, UA-S2, UA-S3) eines Client/Server-Systems unter Verwendung des Kommunikationsprotokolls OPC-UA wobei zur Interaktion des Clients (UA-C) mit dem Server OPC-UA Aufrufe (Write01, Write02) verwendet werden,
wobei nach Eröffnung einer Session (CreateSession) zumindest ein OPC-UA Aufruf (Write01) vom Server empfangen und gespeichert wird und die Ausführung des OPC-UA Aufrufs (Write01) beim Server zunächst simuliert wird und dem Client als Antwort zunächst das Ergebnis der Simulation übermittelt wird (SimResult01) und die Kommunikationssession beendet wird durch den geeigneten OPC-UA Aufruf zum Schließen einer Session (CloseSession),
wobei nach Abschluss der Session der oder die auf dem Server gespeicherten OPC-UA Aufrufe (Write01, Write02) ausgeführt (EXE_01, EXE_02) werden.

2. Verfahren gemäß Patentanspruch 1,
**dadurch gekennzeichnet, dass**
weitere zumindest zweite OPC-UA Server (UA-S1, UA-S2, UA-S3) OPC-UA Aufrufe (Write02) vom Client (UA-C) empfangen und die Ausführung des OPC-UA Aufrufs (Write02) beim Server zunächst simuliert und das simulierte Ergebnis an den Client übermittelt wird (SimResult02).

3. Verfahren gemäß einem der Patentansprüche 1 bis 2,
**dadurch gekennzeichnet, dass**
die Kommunikationssession beendet wird durch den geeigneten OPC-UA Aufruf zum Öffnen einer neuen Session (ActivateSession).

4. Vorrichtung (UA-C) zur Kommunikation mit einem Server (UA-S1, UA-S2, US-S3) eines Client/Server-Systems unter Verwendung des Kommunikationsprotokolls OPC-UA geeignet zur Durchführung des Verfahrens gemäß den Merkmalen eines der Patentansprüche 1 bis 3,
wobei
zur Kommunikation zwischen der Vorrichtung (UA-C) und dem Server (UA-S1, UA-S2, UA-S3) des Client/Server-Systems unter Verwendung des Kommunikationsprotokolls OPC-UA Aufrufe (Write01, Write02) verwendet werden, und
nach Eröffnung einer Session (CreateSession) zumindest ein OPC-UA Aufruf (Write01) an den Server (UA-S1, UA-S2, UA-S3) gesendet und dort gespeichert wird und
als Antwort zunächst das Ergebnis einer Simulation des Ergebnisses des OPC-UA Aufrufs übermittelt wird (SimResult01) und nach Abschluss der Session der oder die auf dem Server gespeicherten OPC-UA Aufrufe (Write01, Write02) ausgeführt (EXE_01, EXE_02) werden.

5. Vorrichtung (UA- S1, UA-S2, US-S3) zur Kommunikation mit einem Client (UA-C) eines Client/Server-Systems unter Verwendung des Kommunikationsprotokolls OPC-UA geeignet zur Durchführung des Verfahrens gemäß den Merkmalen eines der Patentansprüche 1 bis 3,
wobei zur Kommunikation zwischen der Vorrichtung (UA-S1, UA-S2, UA-S3) und dem Client (UA-C) des Client/Server-Systems unter Verwendung des Kommunikationsprotokolls OPC-UA Aufrufe (Write01, Write02) verwendet werden, und
nach Eröffnung einer Session (CreateSession) zumindest ein OPC-UA Aufruf (Write01) vom Server (UA-S1, UA-S2, UA-S3) empfangen und dort gespeichert wird und
als Antwort zunächst das Ergebnis einer Simulation des Ergebnisses des OPC-UA Aufrufs an den Client übermittelt wird (SimResult01) und nach Abschluss der Session der oder die auf dem Server gespeicherten OPC-UA Aufrufe (Write01, Write02) ausgeführt (EXE_01, EXE_02) werden.

## Claims

1. Method for communication between a client (UA-C) and a server (UA-S1, UA-S2, UA-S3) of a client/server system using the OPC-UA communication protocol, OPC-UA calls (Write01, Write02) being used for the interaction of the client (UA-C) with the server,
wherein
after opening a session (CreateSession), at least one OPC-UA call (Write01) is received and stored by the server and
the execution of the OPC-UA call (Write01) is initially simulated at the server and
the result of the simulation is initially transmitted to the client as response (SimResult01) and
the communication session is ended by the appropriate OPC-UA call for closing a session (CloseSession), wherein after termination of the session, the OPC-UA call(s) (Write01, Write02) stored on the server are executed (EXE_01, EXE_02).

2. Method according to Claim 1,
**characterized in that**
further at least second OPC-UA servers (UA-S1, UA-S2, UA-S3) receive from OPC-UA calls (Write02) by the client (UA-C) and the execution of the OPC-UA call (Write02) is initially simulated at the server and the simulated result is transmitted to the client (SimResult02).

3. Method according to any one of Claims 1 to 2,
**characterized in that**
the communication session is ended by the appropriate OPC-UA call for opening a new session (ActivateSession).

4. Device (UA-C) for communication with a server (UA-S1, UA-S2, US-S3) of a client/server system using the OPC-UA communication protocol suitable for carrying out the method according to the features of one of Claims 1 to 3,
wherein
OPC-UA calls (Write01, Write02) are used for communication between the device (UA-C) and the server (UA-S1, UA-S2, UA-S3) of the client/server system using the communication protocol, and
after opening a session (CreateSession), at least one OPC-UA call (Write01) is sent to the server (UA-S1, UA-S2, UA-S3) and stored there, and
initially, the result of a simulation of the result of the OPC UA call is transmitted as a response (SimResult01) and after termination of the session, the OPC-UA call(s) (Write01, Write02) stored on the server are executed (EXE_01, EXE_02).

5. Device (UA-S1, UA-S2, US-S3) for communication with a client (UA-C) of a client/server system using the OPC-UA communication protocol suitable for carrying out the method according to the features of one of Claims 1 to 3,
wherein OPC-UA calls (Write01, Write02) are used for communication between the device (UA-S1, UA-S2, UA-S3) and the client (UA-C) of the client/server system using the communication protocol, and
after opening a session (CreateSession), at least one OPC-UA call (Write01) is received from the server (UA-S1, UA-S2, UA-S3) and stored there, and
initially, the result of a simulation of the result of the OPC-UA call is transmitted to the client as a response (SimResult01) and after termination of the session, the OPC-UA call(s) (Write01, Write02) stored on the server are executed (EXE_01, EXE_02).

## Revendications

1. Procédé pour la communication entre un client (UA-C) et un serveur (UA-S1, UA-S2, UA-S3) d'un système client/serveur employant le protocole de communication OPC-UA, dans lequel pour l'interaction du client (UA-C) avec le serveur OPC-UA, des appels OPC-UA (Write01, Write02) sont employés,
dans lequel, après ouverture d'une session (CreateSession), au moins un appel OPC-UA (Write01) est reçu et sauvegardé par le serveur et
l'exécution de l'appel OPC-UA (Write01) au niveau du serveur est d'abord simulée et
le résultat de la simulation (SimResult01) est d'abord transmis au client en tant que réponse et
la session de communication est terminée par l'appel OPC-UA approprié pour fermer une session (ClosseSession), dans lequel
après la clôture de la session, le(s) appel(s) OPC-UA (Write01, Write02) sauvegardé(s) sur le serveur est/sont exécuté(s) (EXE_01, EXE_02).

2. Procédé selon la revendication 1,
**caractérisé en ce que** d'autres au moins deuxièmes serveurs OPC-UA (UA-S1, UA-S2, UA-S3) reçoivent des appels OPC-UA (Write02) du client (UA-C) et l'exécution de l'appel OPC-UA (Write02) est d'abord simulée au niveau du serveur et le résultat simulé est transmis au client (SimResult02).

3. Procédé selon l'une des revendications 1 à 2,
**caractérisé en ce que**
la session de communication est terminée par l'appel OPC-UA approprié pour ouvrir une nouvelle session (ActivateSession).

4. Dispositif (UA-C) pour la communication avec un serveur (UA-S1, UA-S2, UA-S3) d'un système client/serveur employant le protocole de communication OPC-UA approprié pour exécuter le procédé selon les caractéristiques d'une des revendications 1 à 3,
dans lequel
pour la communication entre le dispositif (UA-C) et le serveur (UA-S1, UA-S2, UA-S3) du système client/serveur employant le protocole de communication, des appels OPC-UA (Write01, Write02) sont employés, et
après ouverture d'une session (CreateSession), au moins un appel OPC-UA (Write01) est envoyé au serveur (UA-S1, UA-S2, UA-S3) et y est sauvegardé et
le résultat d'une simulation du résultat de l'appel OPC-UA est d'abord transmis (SimResult01) en tant que réponse et
après la clôture de la session, le(s) appel(s) OPC-UA (Write01, Write02) sauvegardé(s) sur le serveur est/sont exécuté(s) (EXE_01, EXE_02).

5. Dispositif (UA-S1, UA-S2, UA-S3) pour la communication avec un client (UA-C) d'un système client/serveur employant le protocole de communication OPC-UA approprié pour exécuter le procédé selon les caractéristiques d'une des revendications 1 à 3,
dans lequel
pour la communication entre le dispositif (UA-S1, UA-S2, UA-S3) et le client (UA-C) du système client/serveur employant le protocole de communication, des appels OPC-UA (Write01, Write02) sont employés, et
après ouverture d'une session (CreateSession), au moins un appel OPC-UA (Write01) est reçu par le serveur (UA-S1, UA-S2, UA-S3) et y est sauvegardé et
le résultat d'une simulation du résultat de l'appel OPC-UA est d'abord transmis au client (SimResult01) en tant que réponse et
après la clôture de la session, le(s) appel(s) OPC-UA (Write01, Write02) sauvegardé(s) sur le serveur est/sont exécuté(s) (EXE_01, EXE_02).
